# FASCICULE DE BREVET EUROPEEN

(11) **EP 3 169 575 B1**
(45) Date de publication et mention de la délivrance du brevet: **01.08.2018**
(21) Numéro de dépôt: 15736569.3
(22) Date de dépôt: 29.06.2015
(51) Int. Cl.: B62D 1/181, B60W 10/20, B60W 30/18

(54) **PROCEDE DE COMMANDE DE LA POSITION ANGULAIRE DU VOLANT D'UN VEHICULE ET VEHICULE ASSOCIE**
VERFAHREN ZUR STEUERUNG DER WINKELPOSITION FAHRZEUGLENKRADS UND ZUGEHÖRIGES FAHRZEUG
METHOD FOR CONTROLLING THE ANGULAR POSITION OF A VEHICLE STEERING WHEEL AND ASSOCIATED VEHICLE

(30) Priorité: 15.07.2014 FR 1456770
(43) Date de publication de la demande: 24.05.2017
(73) Titulaire: PSA Automobiles SA, 78300 Poissy (FR)
(72) Inventeur: MAUNIER, Bruno, F-92320 Chatillon (FR)
(74) Mandataire: Rosenberg, Muriel Sylvie
(86) Numéro de dépôt international: PCT/FR2015/051748
(87) Numéro de publication internationale: WO 2016/009123

(56) Documents cités:
- DE-A1-102006 032 769
- DE-A1-102010 053 120
- US-A1- 2010 002 075
- US-A1- 2013 166 154

## Description

La présente invention se rapporte à un procédé de commande de la position angulaire du volant d'un véhicule et à un véhicule associé.

L'invention appartient au domaine des caméras localisées à l'intérieur des véhicules et dédiées au recueil de paramètres du conducteur à partir de l'instant où celui-ci s'installe au poste de conduite.

Dans le cas d'un véhicule automobile, par exemple, on peut disposer une caméra à l'intérieur de l'habitacle, entre le volant et le combiné. Afin de ne pas occulter le champ de la caméra, le document JP-A-06156285 propose de prévoir sur le volant une branche centrale transparente, ce qui permet à la caméra de surveiller le conducteur.

Néanmoins, l'utilisation d'un matériau particulier pour une partie du volant rend sa fabrication plus complexe et plus coûteuse. En outre, un tel volant risque d'être moins robuste que les volants classiques. Un autre exemple de système de commande de position de volant utilisant une caméra est connu de US2013/166154 A1. La présente invention a pour but de remédier à ces inconvénients.

Dans ce but, la présente invention propose un procédé de commande de la position angulaire du volant d'un véhicule par rapport au champ d'une caméra intérieure disposée entre le volant et le combiné du véhicule ou entre le volant et la planche de bord du véhicule, le véhicule comportant un système de direction pilotable, ce procédé étant remarquable en ce qu'il comporte des étapes consistant à :
- avant le démarrage du véhicule, déterminer si le volant occulte au moins partiellement le champ de la caméra, à partir de la position angulaire du volant ;
- si le champ de la caméra est au moins partiellement occulté par le volant, actionner le système de direction pilotable de façon à ramener le volant dans une position angulaire où le volant n'occulte pas le champ de la caméra.

Ainsi, l'invention permet, sans aucune modification du volant ni de la caméra intérieure, de garantir la disponibilité permanente de l'intégralité du champ de la caméra pour recueillir les paramètres voulus du conducteur dès l'instant où celui-ci s'installe au poste de conduite.

Selon une caractéristique particulière, le procédé comporte en outre une étape consistant à recueillir en temps réel la position angulaire du volant par l'intermédiaire d'un capteur d'angle de rotation du volant compris dans le véhicule.

Selon une caractéristique particulière, le procédé comporte en outre une étape consistant à mémoriser dans un calculateur compris dans le véhicule des caractéristiques géométriques du volant et la valeur de l'ouverture de champ de la caméra.

Selon une caractéristique particulière, le procédé comporte en outre une étape consistant à activer le calculateur lorsque la portière du véhicule côté conducteur s'ouvre, le moteur du véhicule étant par ailleurs éteint.

Dans le même but que celui indiqué plus haut, la présente invention propose également un véhicule comportant un volant, un combiné et/ou une planche de bord et une caméra intérieure disposée entre le volant et le combiné ou entre le volant et la planche de bord, le véhicule comportant en outre un système de direction pilotable, le véhicule étant remarquable en ce qu'il comporte en outre un dispositif de commande de la position angulaire du volant par rapport au champ de la caméra, comportant :
- un capteur d'angle de rotation du volant ;
- un calculateur adapté à déterminer, avant le démarrage du véhicule, si le volant occulte au moins partiellement le champ de la caméra, à partir de la position angulaire du volant fournie par le capteur ; et
- des moyens adaptés à actionner le système de direction pilotable de façon à ramener le volant dans une position angulaire où le volant n'occulte pas le champ de la caméra, si le champ de la caméra est au moins partiellement occulté par le volant.

Selon une caractéristique particulière, le capteur d'angle de rotation du volant est adapté à fournir la position angulaire du volant en temps réel.

Selon une caractéristique particulière, le calculateur est adapté à mémoriser des caractéristiques géométriques du volant et la valeur de l'ouverture de champ de la caméra.

Selon une caractéristique particulière, le véhicule comporte en outre un élément d'activation du calculateur en réponse à l'ouverture de la portière du véhicule côté conducteur, le moteur du véhicule étant par ailleurs éteint.

Selon une caractéristique particulière, le véhicule est de type automobile.

D'autres aspects et avantages de l'invention apparaîtront à la lecture de la description qui suit d'un mode particulier de réalisation, donné à titre d'exemple non limitatif et en référence aux dessins qui l'accompagnent, dans lesquels :
- la figure 1 est une représentation schématique d'une vue d'ensemble d'un poste de conduite classique incluant une caméra intérieure ;
- la figure 2 est un organigramme illustrant des étapes d'un procédé de commande conforme à la présente invention, dans un mode particulier de réalisation ; et
- la figure 3 est une vue schématique d'un véhicule conforme à la présente invention, dans un mode particulier de réalisation.

On considère dans le cadre de la présente invention un véhicule qui, à titre d'exemple nullement limitatif, peut être de type automobile. Néanmoins, il pourrait aussi bien d'agir d'un autre type de véhicule comportant un volant pour sa conduite, comme par exemple certains types de bateaux.

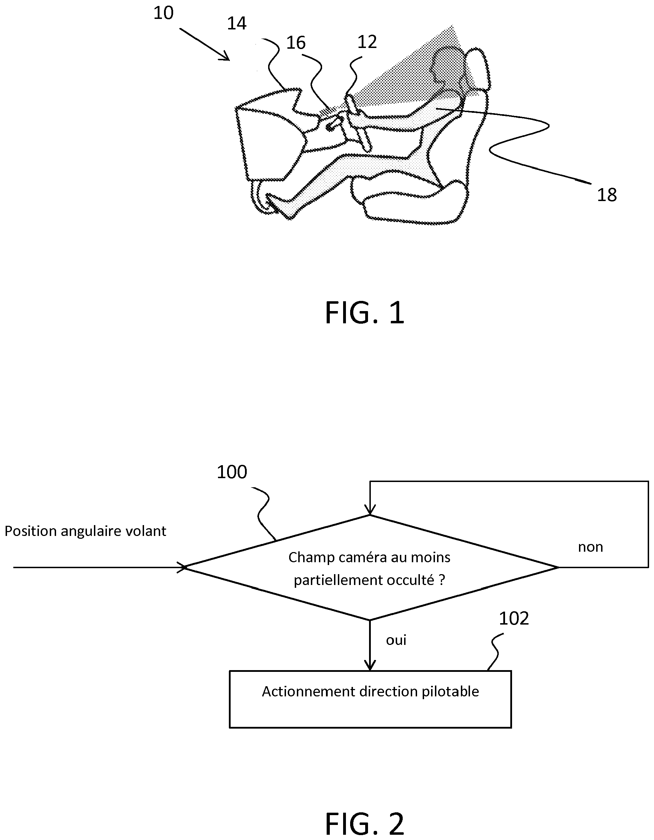

La figure 1 illustre de façon schématique et simplifiée une vue d'ensemble d'un poste de conduite 10 classique dans lequel le procédé conforme à l'invention peut être mis en oeuvre.

Ce poste de conduite 10 comporte notamment un volant 12, un combiné 14 et un système de direction pilotable (non illustré).

Le poste de conduite 10 comporte en outre une caméra intérieure 16 disposée entre le volant 12 et le combiné 14. En variante, la caméra intérieure 16 peut être disposée entre le volant 12 et la planche de bord (non représentée). Cette caméra 16 a vocation à recueillir des paramètres du conducteur (position de la tête, état de vigilance, etc.) à partir de l'instant où celui-ci s'installe au poste de conduite 10.

Le champ de la caméra 16 est matérialisé par un cône grisé sur la figure 1. Ce champ est principalement centré sur le visage d'un conducteur 18 lorsque celui-ci occupe le siège conducteur.

Du fait de l'implantation de la caméra 16, le champ de celle-ci traverse le volant 12. Par ailleurs, la caméra 16 garde une position relative fixe par rapport au volant 12 lorsque celui-ci est réglable en hauteur et/ou en profondeur.

Ainsi, en fonction de l'angle de rotation du volant 12, les branches du volant 12 sont susceptibles d'occulter partiellement ou totalement le champ de la caméra 16.

Si aucune action n'était entreprise pour remédier à ce problème, il ne serait alors plus possible de recueillir les paramètres du conducteur dès que celui-ci s'installe au poste de conduite 10 : il faudrait attendre, soit que le conducteur tourne le volant 12, soit qu'un système optionnel de parking automatique tourne le volant pour quitter une place de stationnement, par exemple. En conséquence, à vitesse véhicule nulle, certaines prestations offertes au conducteur seraient, soit dégradées, soit impossibles à mettre en oeuvre. Ces prestations incluent notamment le réglage automatique du poste de conduite ou encore le réglage des préférences télématiques.

L'organigramme de la figure 2 illustre les principales étapes du procédé de commande de la position angulaire du volant 12 par rapport au champ de la caméra 16.

Lors d'une première étape consistant en un test 100, avant le démarrage du véhicule, à partir de la connaissance de la position angulaire du volant 12, on détermine si le volant 12 occulte partiellement ou totalement le champ de la caméra 16.

Lors d'une deuxième étape 102, si le champ de la caméra est effectivement au moins partiellement occulté par le volant 12, on actionne le système de direction pilotable du véhicule, de façon à faire tourner le volant 12 pour le ramener dans une position angulaire où il n'occulte plus le champ de la caméra 16.

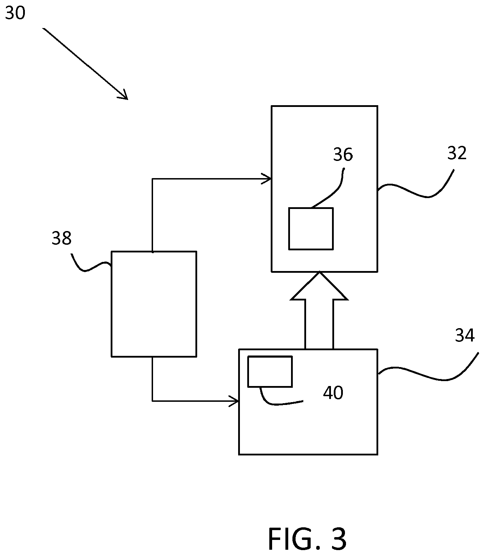

La figure 3 illustre sous une forme schématique très simplifiée un véhicule 30 conforme à la présente invention, dans un mode particulier de réalisation.

Le véhicule 30 comporte notamment un système 32 de direction pilotable et un calculateur 34 connecté au système 32 de direction pilotable de façon à pouvoir lui fournir des données.

Le véhicule 30 comporte en outre un système 36 d'actionnement du système 32 de direction pilotable, qui dans le mode particulier de réalisation illustré est compris dans le système 32 de direction pilotable mais qui pourrait tout aussi bien être un élément du véhicule 30 extérieur au système 32 de direction pilotable. Le système d'actionnement 36 comporte notamment des éléments de verrouillage/déverrouillage pilotés de la colonne de direction.

Le véhicule comporte en outre un capteur 38 d'angle de rotation du volant 16, capable de transmettre l'information sur l'angle de rotation du volant 16 au calculateur 34 et au système 32 de direction pilotable.

Le calculateur 34 est adapté à déterminer, avant le démarrage du véhicule 30, si le volant 12 occulte en partie ou intégralement le champ de la caméra 16, à partir de la position angulaire du volant fournie par le capteur 38.

Le capteur 38 peut être adapté à fournir la position angulaire du volant 12 en temps réel. Ainsi, une étape optionnelle du procédé conforme à l'invention, non illustrée sur la figure 2, consiste à recueillir en temps réel la position angulaire du volant 12 par l'intermédiaire de ce capteur 38.

De façon optionnelle, le calculateur 34 peut être adapté à mémoriser :
- des caractéristiques géométriques du volant 12, telles que son diamètre et les dimensions de chacune de ses branches ; et
- la valeur de l'ouverture du champ de la caméra 16.

Ainsi, une étape optionnelle du procédé conforme à l'invention consiste à effectuer ces opérations de mémorisation.

En ce qui concerne les caractéristiques géométriques du volant 12, la mémorisation a lieu une fois pour toutes, tandis que la valeur de l'ouverture du champ de la caméra 16 est réactualisée lorsque le calculateur 34, qui est en outre connecté à la caméra 16, reçoit de la part de celle-ci une notification selon laquelle le champ a été modifié.

Le véhicule 30 comporte aussi un élément 40 d'activation du calculateur 34, qui peut être soit compris dans le calculateur 34, soit extérieur à celui-ci. L'élément 40 active le calculateur par exemple en réponse à l'ouverture de la portière du véhicule 30 côté conducteur, le moteur du véhicule 30 étant par ailleurs éteint et les portières étant verrouillées ou non.

Cela garantit que la position angulaire du volant 12 sera le cas échéant rectifiée dès que la portière s'ouvrira, donc avant même que le conducteur prenne place au poste de conduite 10, en cas d'occultation même partielle du champ de la caméra 16 par le volant 12.

Ainsi, la présente invention apporte un gain ergonomique en termes de confort d'utilisation d'un système à base d'identification, étant donné que les fonctions d'accueil du conducteur au poste de conduite bénéficient d'une disponibilité améliorée.

Le client évite ainsi de subir le désagrément d'une fonction automatique de personnalisation qui ne fonctionnerait pas lorsque le volant n'aurait pas été laissé dans la position requise lors de l'utilisation précédente du véhicule.

## Revendications

1. Procédé de commande de la position angulaire du volant (12) d'un véhicule (30) par rapport au champ d'une caméra intérieure (16) disposée entre le volant (12) et le combiné (14) dudit véhicule (30) ou entre le volant (12) et la planche de bord dudit véhicule (30), ledit véhicule (30) comportant un système (32) de direction pilotable, ledit procédé étant **caractérisé en ce qu'**il comporte des étapes consistant à :
- avant le démarrage dudit véhicule (30), déterminer (100) si ledit volant (12) occulte au moins partiellement le champ de ladite caméra (16), à partir de la position angulaire dudit volant (12) ;
- si le champ de ladite caméra (16) est au moins partiellement occulté par ledit volant (12), actionner (102) ledit système (32) de direction pilotable de façon à ramener ledit volant (12) dans une position angulaire où ledit volant (12) n'occulte pas le champ de ladite caméra (16).

2. Procédé selon la revendication 1, **caractérisé en ce qu'**il comporte en outre une étape consistant à recueillir en temps réel la position angulaire du volant (12) par l'intermédiaire d'un capteur (38) d'angle de rotation du volant (12) compris dans ledit véhicule (30).

3. Procédé selon la revendication 1 ou 2, **caractérisé en ce qu'**il comporte en outre une étape consistant à mémoriser dans un calculateur (34) compris dans ledit véhicule (30) des caractéristiques géométriques du volant (12) et la valeur de l'ouverture de champ de la caméra (16).

4. Procédé selon la revendication 3, **caractérisé en ce qu'**il comporte en outre une étape consistant à activer ledit calculateur (34) lorsque la portière du véhicule (30) côté conducteur s'ouvre, le moteur dudit véhicule (30) étant par ailleurs éteint.

5. Véhicule (30) comportant un volant (12), un combiné (14) et/ou une planche de bord et une caméra intérieure (16) disposée entre ledit volant (12) et ledit combiné (14) ou entre ledit volant (12) et ladite planche de bord, ledit véhicule (30) comportant en outre un système (32) de direction pilotable, ledit véhicule (30) étant **caractérisé en ce qu'**il comporte en outre un dispositif de commande de la position angulaire du volant (12) par rapport au champ de ladite caméra (16), comportant :
- un capteur (38) d'angle de rotation du volant (12) ;
- un calculateur (34) adapté à déterminer, avant le démarrage dudit véhicule (30), si ledit volant (12) occulte au moins partiellement le champ de ladite caméra (16), à partir de la position angulaire dudit volant (12) fournie par ledit capteur (38) ; et
- des moyens (36) adaptés à actionner ledit système (32) de direction pilotable de façon à ramener ledit volant (12) dans une position angulaire où ledit volant (12) n'occulte pas le champ de ladite caméra (16), si le champ de ladite caméra (16) est au moins partiellement occulté par ledit volant (12).

6. Véhicule (30) selon la revendication 5, **caractérisé en ce que** le capteur (38) d'angle de rotation du volant (12) est adapté à fournir la position angulaire du volant (12) en temps réel.

7. Véhicule (30) selon la revendication 5 ou 6, **caractérisé en ce que** ledit calculateur (34) est adapté à mémoriser des caractéristiques géométriques du volant (12) et la valeur de l'ouverture de champ de la caméra (16).

8. Véhicule (30) selon la revendication 5, 6 ou 7, **caractérisé en ce qu'**il comporte en outre un moyen (40) d'activation dudit calculateur (34) en réponse à l'ouverture de la portière du véhicule (30) côté conducteur, le moteur dudit véhicule étant par ailleurs éteint.

9. Véhicule (30) selon l'une quelconque des revendications 5 à 8, **caractérisé en ce qu'**il est de type automobile.

## Patentansprüche

1. Verfahren zur Steuerung der Winkelposition des Lenkrads (12) eines Fahrzeugs (30) in Bezug auf das Feld einer inneren Kamera (16), die zwischen dem Lenkrad (12) und dem Kombiinstrument (14) des Fahrzeugs (30) oder zwischen dem Lenkrad (12) und dem Armaturenbrett (30) des Fahrzeugs angeordnet ist, wobei das Fahrzeug (30) ein steuerbares Lenkungssystem (32) umfasst, Verfahren **dadurch gekennzeichnet, dass** es Schritte aufweist, die aus Folgendem bestehen:
- vor dem Anlassen des Fahrzeugs (30), ausgehend von der Winkelposition des Lenkrads (12), Bestimmen (100), ob das Lenkrad (12) das Feld der Kamera (16) mindestens teilweise verdeckt;
- falls das Feld der Kamera (16) mindestens teilweise von dem Lenkrad (12) verdeckt ist, Betätigen (102) des steuerbaren Lenkungssystems (32) derart, dass das Lenkrad (12) in eine Winkelposition zurückgebracht wird, in der das Lenkrad (12) das Feld der Kamera (16) nicht verdeckt.

2. Verfahren nach Anspruch 1, **dadurch gekennzeichnet, dass** es außerdem einen Schritt umfasst, der darin besteht, in Echtzeit die Winkelposition des Lenkrads (12) über einen Drehwinkelsensor (38) des Lenkrads (12), der in dem Fahrzeug (30) enthalten ist, zu erfassen.

3. Verfahren nach Anspruch 1 oder 2, **dadurch gekennzeichnet, dass** es außerdem einen Schritt umfasst, der darin besteht, in einem Rechner (34), der in dem Fahrzeug (30) enthalten ist, geometrische Merkmale des Lenkrads (12) und den Wert der Feldöffnung der Kamera (16) zu speichern.

4. Verfahren nach Anspruch 3, **dadurch gekennzeichnet, dass** es außerdem einen Schritt umfasst, der darin besteht, den Rechner (34) zu aktivieren, wenn die Tür des Fahrzeugs (30) auf der Fahrerseite geöffnet wird, wobei der Motor des Fahrzeugs (30) darüber hinaus ausgeschaltet ist.

5. Fahrzeug (30), das ein Lenkrad (12), ein Kombiinstrument (14) und/oder ein Armaturenbrett und eine innere Kamera (16), die zwischen dem Lenkrad (12) und dem Kombiinstrument (14) oder dem Lenkrad (12) und dem Armaturenbrett angeordnet ist, umfasst, wobei das Fahrzeug (30) außerdem ein steuerbares Lenkungssystem (32) umfasst, wobei das Fahrzeug **dadurch gekennzeichnet ist, dass** es außerdem eine Steuervorrichtung der Winkelposition des Lenkrads (12) in Bezug auf das Feld der Kamera (16) umfasst, die Folgendes umfasst:
- einen Drehwinkelsensor (38) des Lenkrads (12);
- einen Rechner (34), der angepasst ist, um vor dem Anlassen des Fahrzeugs (30) ausgehend von der Winkelposition des Lenkrads (12), die von dem Sensor (38) geliefert wird, zu bestimmen, ob das Lenkrad (12) das Feld der Kamera (16) mindestens teilweise verdeckt, und
- Mittel (36), die angepasst sind, um das steuerbare Lenkungssystem (32) derart zu betätigen, dass das Lenkrad (12) in eine Winkelposition zurückgebracht wird, in der das Lenkrad (12) das Feld der Kamera (16) nicht verdeckt, falls das Feld der Kamera (16) mindestens teilweise von dem Lenkrad (12) verdeckt wird.

6. Fahrzeug (30) nach Anspruch 5, **dadurch gekennzeichnet, dass** der Drehwinkelsensor (38) des Lenkrads (12) angepasst ist, um die Winkelposition des Lenkrads (12) in Echtzeit zu liefern.

7. Fahrzeug (30) nach Anspruch 5 oder 6, **dadurch gekennzeichnet, dass** der Rechner (34) angepasst ist, um geometrische Merkmale des Lenkrads (12) und den Feldöffnungswert der Kamera (16) zu speichern.

8. Fahrzeug (30) nach Anspruch 5, 6 oder 7, **dadurch gekennzeichnet, dass** es außerdem ein Mittel (40) zum Aktivieren des Rechners (34) als Reaktion auf das Öffnen der Tür des Fahrzeugs (30) auf der Fahrerseite umfasst, wobei der Motor des Fahrzeugs darüber hinaus ausgeschaltet ist.

9. Fahrzeug (30) nach einem der Ansprüche 5 bis 8, **dadurch gekennzeichnet, dass** es vom Typ Kraftfahrzeug ist.

## Claims

1. A method for controlling the angular position of the steering wheel (12) of a vehicle (30) with respect to the field of an interior camera (16) disposed between the steering wheel (12) and the instrument cluster (14) of said vehicle (30) or between the steering wheel (12) and the dashboard of said vehicle (30), said vehicle (30) comprising a controllable steering system (32), said method being **characterized in that** it comprises steps consisting in:
- before the said vehicle (30) is started, determining (100) if said steering wheel (12) is at least partially concealing the field of said camera (16), from the angular position of said steering wheel (12);
- if the field of said camera (16) is at least partially concealed by said steering wheel (12), actuating (102) said controllable steering system (32) so as to bring said steering wheel (12) into an angular position in which said steering wheel (12) does not conceal the field of said camera (16) .

2. The method according to claim 1, **characterized in that** it further comprises a step consisting in gathering in real time the angular position of the steering wheel (12) by means of a sensor (38) of the angle of rotation of the steering wheel (12) comprised in said vehicle (30).

3. The method according to claim 1 or 2, **characterized in that** it further comprises a step consisting in storing in a computer (34) comprised in said vehicle (30) geometric characteristics of the steering wheel (12) and the value of the field opening of the camera (16).

4. The method according to claim 3, **characterized in that** it further comprises a step consisting in activating said computer (34) when the door of the vehicle (30) on the driver's side opens, the engine of said vehicle (30) being, furthermore, switched off.

5. A vehicle (30) comprising a steering wheel (12), an instrument cluster (14) and/or a dashboard and an interior camera (16) disposed between said steering wheel (12) and said instrument cluster (14) or between said steering wheel (12) and said dashboard, said vehicle (30) further comprising a controllable steering system (32), said vehicle (30) being **characterized in that** it further comprises a device for controlling the angular position of the steering wheel (12) with respect to the field of said camera (16), comprising:
- a sensor (38) of the angle of rotation of the steering wheel (12);
- a computer (34) suited to determine, before said vehicle (30) is started, if said steering wheel (12) is at least partially concealing the field of said camera (16), from the angular position of said steering wheel (12) provided by said sensor (38); and
- means (36) suited to actuate said controllable steering system (32) so as to bring said steering wheel (12) into an angular position in which said steering wheel (12) is not concealing the field of said camera (16), if the field of said camera (16) is at least partially concealed by said steering wheel (12).

6. The vehicle (30) according to claim 5, **characterized in that** the sensor (38) of the angle of rotation of the steering wheel (12) is suited to provide the angular position of the steering wheel (12) in real time.

7. The vehicle (30) according to claim 5 or 6, **characterized in that** said computer (34) is suited to store geometric characteristics of the steering wheel (12) and the value of the field opening of the camera (16) .

8. The vehicle (30) according to claim 5, 6 or 7, **characterized in that** it further comprises a means (40) for activation of said computer (34) in response to the opening of the door of the vehicle (30) on the driver's side, the engine of said vehicle being, furthermore, switched off.

9. The vehicle (30) according to any one of claims 5 to 8, **characterized in that** it is of the automobile type.
